(19) Europäisches Patentamt
European Patent Office
Office européen des brevets

(11) **EP 2 947 562 A1**

(12) **DEMANDE DE BREVET EUROPEEN**

(43) Date de publication:
25.11.2015 Bulletin 2015/48

(51) Int Cl.:
*G06F 9/30* (2006.01)

(21) Numéro de dépôt: **15167989.1**

(22) Date de dépôt: **18.05.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **23.05.2014 FR 1454683**

(71) Demandeur: **Kalray**
**91400 Orsay (FR)**

(72) Inventeurs:
• **Dupont de Dinechin, Benoît**
  **38000 Grenoble (FR)**
• **Rybczynska, Marta**
  **38000 Grenoble (FR)**

(74) Mandataire: **de Jong, Jean Jacques et al**
**Omnipat**
**24, place des Martyrs de la Résistance**
**13100 Aix en Provence (FR)**

(54) **MULTIPLICATION DE MATRICES DE BITS UTILISANT DES REGISTRES EXPLICITES**

(57) L'invention est relative à un processeur comprenant, dans son jeu d'instructions, une instruction (*sbmm*) de multiplication de matrices de bits ayant un premier opérande (A) de précision double représentant une première matrice à multiplier, un deuxième opérande (B) désignant explicitement deux registres de travail quelconques de précision simple dont les contenus joints représentent une deuxième matrice à multiplier, et un paramètre de destination (C) désignant explicitement deux registres de travail quelconques de précision simple pour contenir conjointement une matrice représentant le résultat de la multiplication.

**Fig 3**

## Description

### Domaine technique

L'invention est relative à un processeur ayant des fonctionnalités de réorganisation de données, utilisant notamment une unité de multiplication de matrices de bits.

### Arrière-plan

Une unité de multiplication de matrices de bits, souvent désignée par BMM (de l'anglais « Bit-Matrix Multiply »), permet de réaliser une réorganisation de données en un seul cycle d'instruction. De nombreux types de réorganisation sont possibles, allant jusqu'à une réorganisation des bits individuels des données traitées. L'article [Yedidya Hilewitz et al. "Bit Matrix Multiplication in Commodity Processors", IEEE International Conference on Application-Specific Systems, Architectures and Processors, 2008] décrit des applications des unités BMM.

En pratique, un opérateur BMM est utilisé avec l'un des opérandes choisi à une valeur constante pour définir une opération particulière sur le contenu de l'autre opérande. Des constantes choisies pour le premier opérande permettent de permuter des rangées de la matrice associée au deuxième opérande, c'est-à-dire permuter les mots représentés par les rangées. Des constantes choisies pour le deuxième opérande permettent de permuter des colonnes de la matrice associée au premier opérande, c'est-à-dire permuter selon le même motif les bits de toutes les rangées de la matrice.

Cependant, une unité BMM trouve des limites en termes d'efficacité lorsque les réorganisations mélangent des données de plusieurs matrices.

### Résumé

On prévoit de façon générale un processeur comprenant, dans son jeu d'instructions, une instruction de multiplication de matrices de bits ayant, un premier opérande de précision double représentant une première matrice à multiplier, un deuxième opérande désignant explicitement deux registres de travail quelconques de précision simple dont les contenus joints représentent une deuxième matrice à multiplier, et un paramètre de destination désignant explicitement deux registres de travail quelconques de précision simple pour contenir conjointement une matrice représentant le résultat de la multiplication.

Le processeur peut comprendre un jeu de registres de travail de précision simple conçu pour, en lecture, joindre les contenus de deux registres individuellement sélectionnés en un mot sortant de précision double et, en écriture, séparer un mot entrant de précision double dans deux registres individuellement sélectionnés ; une unité de multiplication de matrices de bits conçue pour recevoir deux matrices multiplicandes sous la forme de mots de précision double et écrire une matrice résultat sous la forme d'un mot de précision double dans le jeu de registres ; une unité de traitement d'instructions conçue pour, à l'exécution d'une instruction de multiplication de matrices de bits :

- fournir le premier opérande directement comme un premier des deux multiplicandes de l'unité de multiplication de matrices de bits,

- utiliser le deuxième opérande pour lire dans le jeu de registres le deuxième multiplicande de l'unité de multiplication de matrices de bits, et

- utiliser le paramètre de destination pour écrire dans le jeu de registres le résultat fourni par l'unité de multiplication de matrices de bits.

L'unité de multiplication de matrices de bits peut en outre être conçue pour répondre à une variante de l'instruction de multiplication de matrices de bits en fournissant un résultat de précision double correspondant à la matrice transposée du résultat de la multiplication.

On prévoit également un procédé de multiplication de matrices de bits, comprenant les étapes consistant à représenter des matrices de bits par des mots de précision double ; lire deux registres individuellement sélectionnés dans un jeu de registres de travail de précision simple ; joindre les contenus des deux registres lus pour former une première matrice multiplicande ; multiplier la première matrice multiplicande par une deuxième matrice multiplicande ; séparer le résultat de la multiplication en deux mots de précision simple ; et écrire les deux mots de précision simple dans deux registres individuellement sélectionnés du jeu de registres.

Le procédé peut comprendre en outre les étapes consistant à définir la deuxième matrice multiplicande directement dans un premier opérande d'une instruction de multiplication de matrices de bits ; définir les registres servant à former la première matrice multiplicande dans un deuxième opérande de l'instruction de multiplication de matrices de bits ; et définir les registres servant à accueillir le résultat de la multiplication dans un paramètre de destination de l'instruction de multiplication de matrices de bits.

### Description sommaire des dessins

Des modes de réalisation seront exposés dans la description suivante, faite à titre non limitatif en relation avec les figures jointes parmi lesquelles :

• la figure 1 est un schéma-bloc d'une unité BMM conçue pour traiter des matrices de 8x8 bits ;

• la figure 2 illustre le fonctionnement d'une unité BMM ;

- la figure 3 est un schéma-bloc d'une unité BMM associée à un banc de registres de structure particulière d'un processeur ;

- la figure 4 illustre une opération d'entrelacement de mots provenant de deux paquets ;

- les figures 5A à 5C illustrent des données à diverses phases de l'exécution d'une instruction BMM particulière utilisée pour traiter la réorganisation de la figure 4;

- la figure 6 illustre une opération d'entrelacement de bits de deux paquets ; et

- les figures 7A à 7D illustrent des données à diverses phases de l'exécution de deux instructions BMM particulières utilisées pour traiter la réorganisation de la figure 6.

**Description de modes de réalisation**

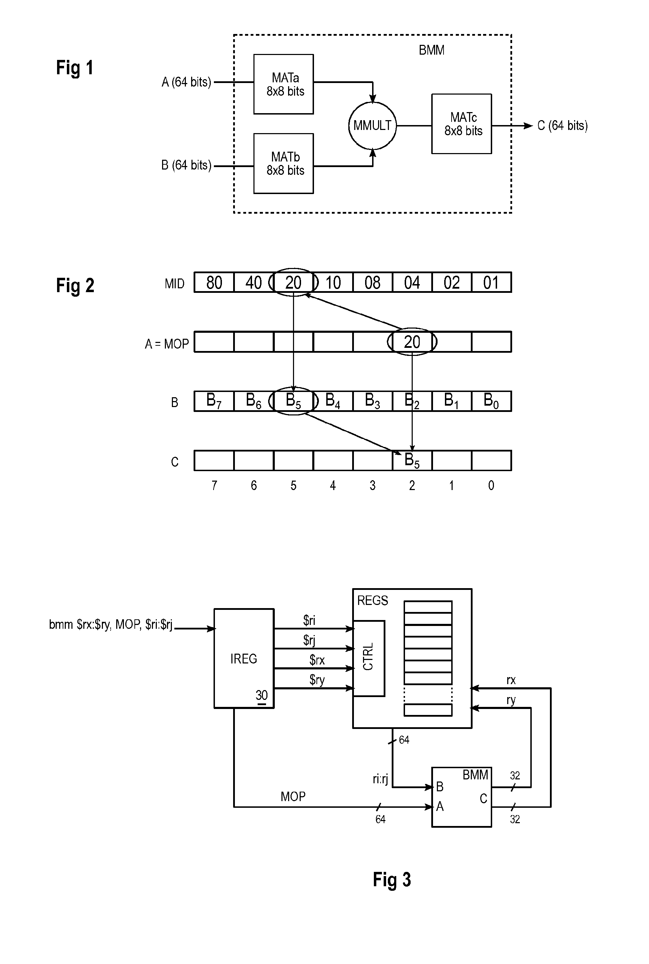

La figure 1 est un schéma-bloc d'une unité BMM. La dimension des matrices manipulées est généralement carrée et conforme à l'un des formats de précision gérés par le processeur.

Ci-après on considère à titre d'exemple un processeur de 32 bits gérant une précision « simple » de 32 bits et une précision « double » de 64 bits. Dans ce cadre, les matrices sont des matrices de 8x8 bits dont chacune est représentable par un mot de précision double (64 bits).

L'unité BMM reçoit ainsi deux mots de 64 bits A et B représentant deux matrices multiplicandes de 8x8 bits MATa et MATb. Les matrices MATa et MATb sont multipliées par un circuit câblé MMULT pour produire une matrice résultat MATc de 8x8 bits. Cette matrice MATc est fournie par l'unité BMM sous la forme d'un mot de 64 bits C.

On considère ci-après que les octets formant un mot de 64 bits représentant une matrice sont rangés par poids croissants de la première rangée à la huitième rangée de la matrice, et que les bits de chaque octet sont rangés par poids décroissants de la première colonne à la huitième colonne de la matrice. Ainsi, si on désigne par $b_{ij}$ le bit de poids $j$ de l'octet de poids $i$ d'un mot de 64 bits, la matrice correspondante est exprimée par :

$$\begin{matrix} b_{07} & b_{06} & b_{05} & b_{04} & b_{03} & b_{02} & b_{01} & b_{00} \\ b_{17} & b_{16} & b_{15} & b_{14} & b_{13} & b_{12} & b_{11} & b_{10} \\ b_{27} & b_{26} & b_{25} & b_{24} & b_{23} & b_{22} & b_{21} & b_{20} \\ b_{37} & b_{36} & b_{35} & b_{34} & b_{33} & b_{32} & b_{31} & b_{30} \\ b_{47} & b_{46} & b_{45} & b_{44} & b_{43} & b_{42} & b_{41} & b_{40} \\ b_{57} & b_{56} & b_{55} & b_{54} & b_{53} & b_{52} & b_{51} & b_{50} \\ b_{67} & b_{66} & b_{65} & b_{64} & b_{63} & b_{62} & b_{61} & b_{60} \\ b_{77} & b_{76} & b_{75} & b_{74} & b_{73} & b_{72} & b_{71} & b_{70} \end{matrix}$$

Comme on l'a précédemment indiqué, l'un des opérandes reçoit une constante qui définit la réorganisation à opérer sur l'autre opérande, variable. Si l'unité BMM effectue la multiplication AxB, en choisissant une constante pour l'opérande A, on définit une réorganisation des rangées de la matrice associée à l'opérande B, c'est-à-dire des octets formant l'opérande B. En choisissant une constante pour l'opérande B, on définit une réorganisation des colonnes de la matrice associée à l'opérande A. Les cas envisagés ci-après à titre d'exemple peuvent être traités en utilisant des constantes pour l'opérande A.

Une constante particulière est celle associée à la matrice identité, comprenant des 1 seulement sur la première diagonale. Pour une matrice 8x8 représentant des opérandes B de 64 bits, la matrice identité s'exprime en hexadécimal par :

**MID = 0x80 40 20 10 08 04 02 01**

Chaque couple de chiffres d'une constante représente un octet ou rangée de la matrice, l'octet de poids le plus faible (0x01) correspondant à la première rangée de la matrice.

A partir de cette constante MID, on peut construire une constante hexadécimale MOP définissant une opération de permutation d'octets quelconque. On considère que les poids des octets des opérandes et du résultat croissent de droite à gauche à partir de la valeur 0. Alors, si la position $i$ de la constante MOP contient la valeur 0xXY, où 0xXY est le contenu de la position $j$ de la constante MID, l'opération produit un résultat C dont l'octet de position $i$ reçoit l'octet à la position $j$ du deuxième opérande B.

La figure 2 illustre cette fonctionnalité à l'aide d'un exemple. On considère que le premier opérande A reçoit une constante MOP dont l'octet de poids 2 contient la valeur 0x20. L'opérande B reçoit huit octets $B_0$ à $B_7$. L'octet de valeur 0x20 de la constante MOP identifie le poids 5 de la matrice identité MID. Dans ces conditions, l'octet de poids 5, $B_5$, de l'opérande B est placé au poids 2 du résultat C.

Selon cette technique, on peut définir plusieurs constantes utiles, par exemple :

0x01 02 04 08 10 20 40 80 : inversion l'ordre des octets du deuxième opérande B,

0x80 40 08 04 20 10 02 01 : entrelacement des mots de 16 bits des deux mots de 32 bits formant l'opérande B,

0x80 08 40 04 20 02 10 01 : entrelacement des octets des deux mots de 32 bits formant l'opérande B, etc.

Toute réorganisation d'octets au sein d'un même opérande B est ainsi possible en construisant convenablement une constante MOP pour l'opérande A. Il existe cependant des situations où l'on souhaite réorganiser des données dans une séquence de données trop grande pour les matrices traitées par l'unité BMM. La séquence de données peut alors être divisée en plusieurs paquets de la taille des matrices, et chaque paquet peut être traité à tour de rôle par l'unité BMM. Si des données de deux paquets consécutifs doivent être mélangées dans un seul résultat de multiplication C, on peut être contraint de procéder à plusieurs transferts entre registres de travail pour préparer les opérandes à fournir à l'unité BMM.

La figure 3 est un schéma-bloc partiel d'un mode de réalisation de processeur muni d'une unité BMM permettant, à l'aide d'instructions de BMM spécifiques, de réduire le nombre de cycles d'instructions nécessaires à mélanger des données provenant de plusieurs paquets.

Le processeur comprend un jeu de registres de travail REGS. La taille des registres est adaptée au processeur. Dans le cadre d'un processeur de 32 bits, les registres ont également une taille de 32 bits, correspondant à une précision simple. L'unité BMM est par contre conçue pour traiter des mots de précision double (64 bits). Le jeu de registres est associé à un circuit de commande CTRL qui peut être conçu pour fournir simultanément les contenus d'une paire de registres comme multiplicande de 64 bits à l'unité BMM. Le circuit de commande peut également être conçu pour écrire le résultat de la multiplication, de précision double, dans une paire de registres.

Dans une architecture de processeur classique conçue pour ainsi utiliser une paire de registres pour manipuler des données de précision double, les instructions identifient seulement le premier registre de la paire. Le deuxième registre de la paire est implicitement le registre de rang suivant dans le système d'adressage des registres. Ainsi, les instructions manipulant des données de précision double ne peuvent identifier que les registres de rang pair, sachant que les registres de rang impair sont réservés pour former implicitement des paires avec les registres identifiés par les instructions.

L'architecture de la figure 3 est conçue pour permettre à des instructions d'identifier explicitement deux registres quelconques pour former une paire servant à contenir un mot de précision double. On prévoit notamment une instruction de BMM conçue pour identifier explicitement chacun des deux registres contenant conjointement un opérande, et chacun des deux registres recevant conjointement le résultat.

Plus spécifiquement, pour effectuer une multiplication de matrices de type C = MOPxB, on peut prévoir une instruction de BMM notée :

**bmm $rx:$ry, MOP, $ri:$rj**

Où « $rx:$ry » désigne les adresses des deux registres à utiliser pour recevoir le résultat C, et « $ri:$rj » désigne les adresses des deux registres qui contiennent le multiplicande B. Les notations sans le signe « $ » désigneront les contenus des registres. La notation « MOP » désigne une constante immédiate de précision double véhiculée dans l'instruction, qui est fournie directement comme multiplicande A de l'unité BMM. On suppose que le premier registre des paires contient les octets de poids faible, et le deuxième registre les octets de poids fort. Ainsi, la constante MOP est également exprimée selon ce format - par exemple, si la constante MOP est choisie égale à la matrice identité MID, elle serait exprimée sous la forme :

**MOP = 0x08040201:0x80402010.**

Un registre d'instruction 30 est conçu pour fournir en parallèle les adresses de registres ($ri, $rj, $rx, $ry) véhiculées par l'instruction *bmm* au circuit de commande CTRL, et l'opérande MOP comme multiplicande A à l'unité BMM. Le circuit de commande est alors conçu pour joindre les contenus des registres $ri et $rj pour former le multiplicande B de l'unité BMM, et séparer le résultat C de la multiplication dans les deux registres $rx et $ry (les octets de poids faibles étant associés aux premiers registres des paires).

Dans certaines architectures, l'opérande A de l'instruction *bmm* peut également être de type registre et, comme l'opérande B, identifier une paire de registres explicites $ru:$rv.

En fait, dans de nombreuses architectures de processeur, les valeurs immédiates véhiculées dans les instructions sont utilisées comme dernier paramètre. On préfère alors utiliser une instruction du type :

**sbmm $rx:$ry, $ri:$rj, MOP**
**Où**

**sbmm C, B, A**

Produit le même résultat que
**bmm C, A, B**
L'unité BMM n'est pas modifiée - le préfixe « s », pour « swapped », de l'instruction *sbmm* signifie simplement que les opérandes de l'instruction sont intervertis par câblage par rapport aux multiplicandes de l'unité BMM.

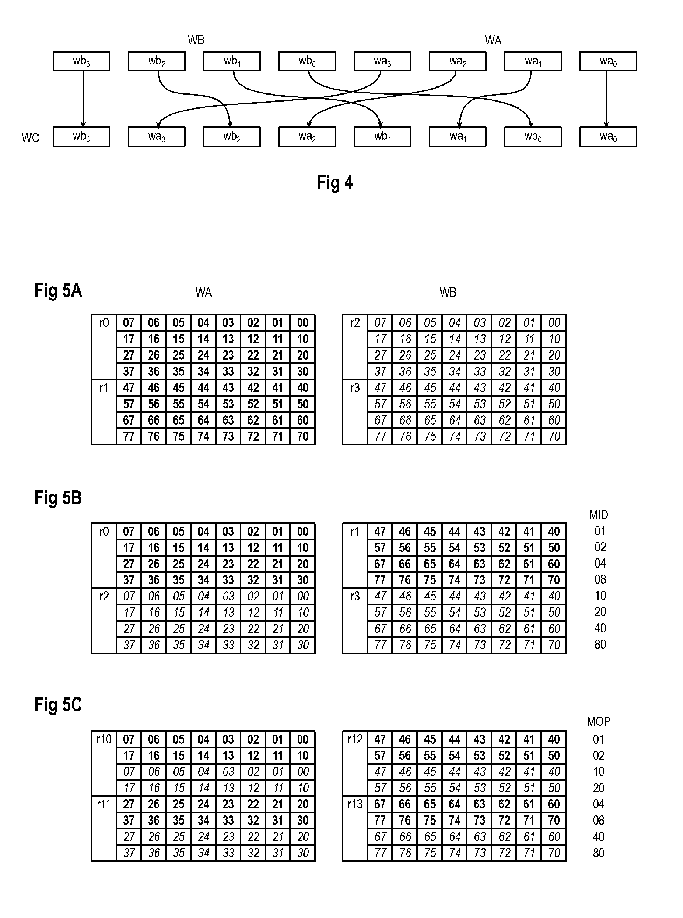

La figure 4 illustre un premier exemple de réorganisation de données consistant à entrelacer des mots de 16 bits de deux paquets de quatre mots de 16 bits. Un tel type de réorganisation peut être utile dans le cas de processeurs de type SIMD (de l'anglais « Single Instruction-Multiple Data »). Dans un processeur SIMD, une instruction unique est fournie simultanément à plusieurs unités de traitement similaires qui traitent simultanément des « voies » de données respectives. Dans de nombreuses situations, on souhaite, à certains stades du traitement, aiguiller les données vers des voies différentes.

Les mots du premier paquet WA sont désignés par $wa_0$ à $wa_7$, et les mots du deuxième paquet WB par $wb_0$ à $wb_7$. L'entrelacement consiste à produire une séquence de huit mots de 16 bits WC où chaque mot pris dans le paquet WA est suivi du mot de même poids du paquet WB, comme cela est représenté.

Avec l'architecture de la figure 3, une telle opération peut être réalisée à l'aide de seulement deux instructions *sbmm.* Par exemple, en supposant que les deux paquets de mots sont contenus initialement dans les registres $r0 à $r3 :

    **sbmm        $r10:$r11,        $r0:$r2, 0x20100201:0x80400804**

    **sbmm        $r12:$r13,        $r1:$r3, 0x20100201:0x80400804**

Les figures 5A à 5C illustrent plus en détail le fonctionnement de ces instructions.

La figure 5A représente les contenus initiaux des registres $r0 à $r3, sous la forme de matrices de 8x8 bits dans le format précédemment précisé. Les cellules des matrices contiennent simplement les indices *ij* des bits. La paire de registres $r0:$r1 contient le paquet de mots WA, les indices étant indiqués en gras. La paire de registres $r2:$r3 contient le paquet de mots WB, les indices étant indiqués en italique. Chaque mot, de 16 bits, occupe deux rangées consécutives de la matrice correspondante. Les contenus des premiers registres des paires, associés aux mots de poids faible, sont situés dans la moitié supérieure des matrices.

On remarque que chacun des opérandes B des instructions *sbmm* ci-dessus désigne des paires de registres qui ne correspondent pas à l'une des matrices de la figure 5A. En fait, chaque opérande B désigne une matrice construite à partir d'une moitié de chacune des deux matrices de la figure 5A.

La figure 5B représente les matrices utilisées comme opérandes B par les instructions *sbmm.* Le fait de pouvoir librement sélectionner les deux registres servant à former l'opérande B permet de réaliser sans surcoût en cycles d'instruction une réorganisation préliminaire, notamment une réorganisation impliquant les deux paquets WA et WB. Plus spécifiquement, dans la figure 5B, l'opérande B de la première instruction *sbmm* est formé des deux premiers mots du paquet WA, pris dans le registre $r0, et des deux premiers mots du paquet WB, pris dans le registre $r2. L'opérande B de la deuxième instruction *sbmm* est formé des deux derniers mots du paquet WA, pris dans le registre $r1, et des deux derniers mots du paquet WB, pris dans le registre $r3.

On a illustré à droite des matrices la constante identité MID en correspondance avec les rangées des matrices.

A la figure 5C, les deux instructions *sbmm* ont été exécutées et les résultats ont été écrits dans les paires de registres $r10:$r11 et $r12:$r13, respectivement. La réorganisation opérée a consisté essentiellement à laisser les deux premières rangées et les deux dernières rangées intactes et à échanger les deux dernières rangées du premier registre avec les deux premières rangées du deuxième registre.

La valeur de la constante MOP est indiquée à droite en correspondance avec les rangées des matrices. On constate que les paires de chiffres de la constante MID de la figure 5B ont « suivi » leurs rangées respectives dans la figure 5C pour former la constante MOP. Dans une architecture classique utilisant des paires de registres implicites pour véhiculer des données de précision double, aucune des matrices de la figure 5B n'est utilisable directement comme opérande B d'une instruction de BMM. En effet, les registres des paires n'ont pas des adresses consécutives. Il faudrait au préalable échanger les contenus des registres $r1 et $r2 de la figure 5A, ce qui implique l'exécution de trois instructions d'écriture de registre à registre en passant par un registre temporaire. En d'autres termes, la même opération nécessiterait cinq instructions pour traiter les deux paquets au lieu de deux.

Pour étendre les possibilités du processeur, on propose d'ajouter une instruction notée *sbmmt* réalisant à la fois une opération de BMM et une transposition de la matrice résultat C. En d'autres termes, l'exécution de l'instruction :

    **sbmmt C, B, MOP**

Fournit un résultat C qui est la matrice transposée du résultat C produit par l'instruction
**sbmm C, B, MOP**

Une telle instruction *sbmmt* utilise la même unité BMM que l'instruction *sbmm.* La transposition est faite simplement par le câblage de la sortie de l'unité BMM. L'instruction peut être utilisée pour effectuer une simple transposition lorsque l'opérande MOP est égal à la matrice identité MID.

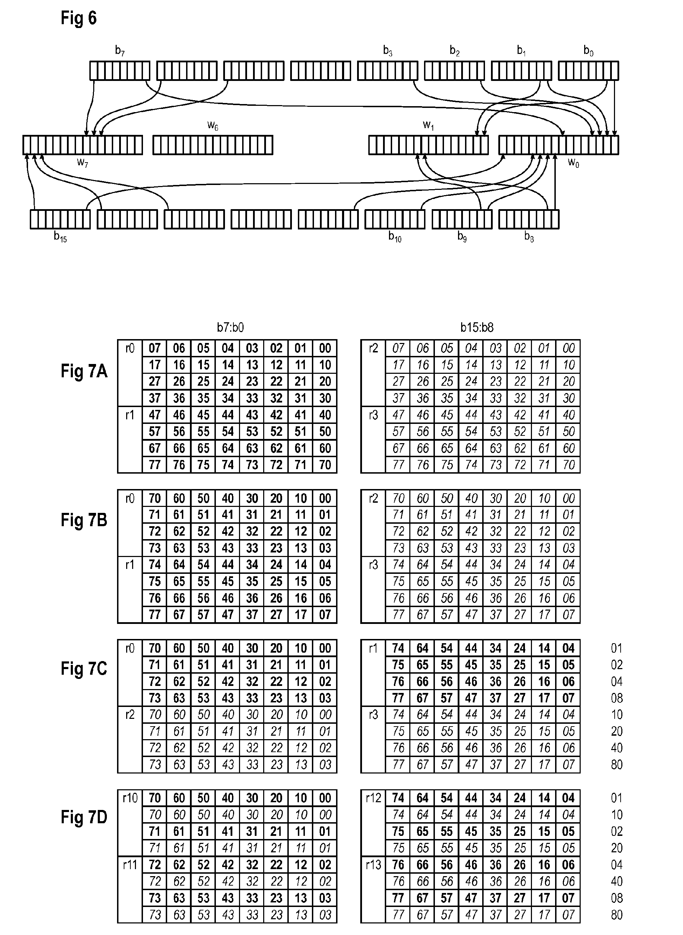

La figure 6 illustre un exemple de réorganisation où l'instruction *sbmmt* est utile. Il s'agit d'une opération dite de « bit-slicing », effectuée à titre d'exemple sur d'une séquence de 16 octets $b_0$ à $b_{15}$ pour produire huit mots de 16 bits $w_0$ à $w_7$. L'opération consiste à grouper dans un mot $w_i$ les bits de poids $i$ des 16 octets, par poids croissants des octets. Une telle opération peut être réalisée à l'aide de seulement deux instructions *sbmmt* et deux instructions *sbmm.* Par exemple, en supposant que les 16 octets sont contenus initialement dans les registres $r0 à $r3 par poids croissants :

> **sbmmt $r0:$r1, $r0:$r1, 0x08040201:0x80402010**
>
> **sbmmt $r2:$r3, $r2:$r3, 0x08040201:0x80402010**
>
> **sbmm $r10:$r11, $r0:$r2, 0x20021001:0x80084004**
>
> **sbmm $r12:$r13, $r1:$r3, 0x20021001:0x80084004**

Les figures 7A à 7D illustrent plus en détail le fonctionnement de ces instructions dans le même format que les figures 5A à 5C. La constante MOP des deux premières instructions *sbmmt* et la matrice identité MID. Il en résulte que ces instructions effectuent une simple transposition.

La figure 7A représente les contenus initiaux des registres $r0 à $r3, la paire de registres $r0:$r1 contenant les octets $b_0$ à $b_7$ de la séquence, et la paire de registres $r2:$r3 contenant les octets $b_8$ à $b_{15}$.

La figure 7B illustre le résultat des instructions *sbmmt,* résultats récrits dans les registres $r0 à $r3. Les matrices de la figure 7A ont été transposées.

Les instructions *sbmmt* classent ainsi les bits de même poids des octets dans une même rangée, et les bits d'un même octet dans une même colonne. Les poids des octets augmentent de droite à gauche, et les poids des bits augmentent de haut en bas.

La figure 7C représente les matrices utilisées comme opérandes B par les instructions *sbmm.* Plus spécifiquement, l'opérande B de la première instruction *sbmm* est formé par le contenu de la paire de registres $r0:$r2, et l'opérande B de la deuxième instruction *sbmm* est formé par le contenu de la paire de registres $r1:$r3.

On a illustré à droite des matrices la constante identité MID en correspondance avec les rangées des matrices.

A la figure 7D, les deux instructions *sbmm* ont été exécutées et les résultats ont été écrits dans les paires de registres $r10:$r11 et $r12:$r13, respectivement.

La valeur de la constante MOP est indiquée à droite en correspondance avec les rangées des matrices. On constate que les paires de chiffres de la constante MID de la figure 7C ont « suivi » leurs rangées respectives dans la figure 7D pour former la constante MOP. Cette constante est celle indiquée plus haut, opérant l'entrelacement des octets des deux mots de 32 bits de l'opérande B.

Dans une architecture classique utilisant des paires de registres implicites pour véhiculer des données de précision double, aucune des matrices de la figure 7C n'est utilisable directement comme opérande B d'une instruction de BMM. En effet, les registres des paires n'ont pas des adresses consécutives. Il faudrait au préalable échanger les contenus des registres $r1 et $r2 de la figure 7B, ce qui implique l'exécution de trois instructions d'écriture de registre à registre en passant par un registre temporaire. En d'autres termes, la même opération nécessiterait sept instructions pour traiter les deux paquets au lieu de quatre.

Dans certaines architectures de processeur dédiées à la cryptographie, on prévoit une unité de traitement dédiée au « bit-slicing », dont la surface peut être supérieure à celle d'une unité BMM. L'architecture de processeur décrite ici offre, à l'aide d'une seule unité de BMM, et un jeu d'instructions pouvant identifier explicitement les registres à utiliser pour des données de précision double, des fonctions de réorganisation de données génériques et flexibles qui ne sont pas limitées à des domaines techniques particuliers.

## Revendications

1. Processeur comprenant, dans son jeu d'instructions, une instruction (*sbmm*) de multiplication de matrices de bits ayant :

   • un premier opérande (A) de précision double représentant une première matrice à multiplier,
   • un deuxième opérande (B) désignant explicitement deux registres de travail quelconques de précision simple dont les contenus joints représentent une deuxième matrice à multiplier, et
   • un paramètre de destination (C) désignant explicitement deux registres de travail quelconques de précision simple pour contenir conjointement une matrice représentant le résultat de la multiplication.

2. Processeur selon la revendication 1, comprenant :

   • un jeu de registres de travail de précision simple (REGS) conçu pour, en lecture, joindre les contenus de deux registres individuellement sélectionnés en un mot sortant de précision double et, en écriture, séparer un mot entrant de précision double dans deux registres individuellement sélectionnés ;
   • une unité de multiplication de matrices de bits (BMM) conçue pour recevoir deux matrices multiplicandes sous la forme de mots de précision double et écrire une matrice résultat sous la forme d'un mot de précision double dans le jeu de registres ;
   • une unité de traitement d'instructions (30) conçue pour, à l'exécution d'une instruction de multiplication de matrices de bits :

     - fournir le premier opérande directement comme un premier des deux multiplicandes de l'unité de multiplication de matrices de bits,

- utiliser le deuxième opérande pour lire dans le jeu de registres le deuxième multiplicande de l'unité de multiplication de matrices de bits, et
- utiliser le paramètre de destination pour écrire dans le jeu de registres le résultat fourni par l'unité de multiplication de matrices de bits.

**3.** Processeur selon la revendication 2, dans lequel l'unité de multiplication de matrices de bits est en outre conçue pour répondre à une variante (*sbmmt*) de l'instruction de multiplication de matrices de bits en fournissant un résultat de précision double correspondant à la matrice transposée du résultat de la multiplication.

**4.** Procédé de multiplication de matrices de bits, comprenant les étapes suivantes :

• représenter des matrices de bits par des mots de précision double ;
• lire deux registres individuellement sélectionnés dans un jeu de registres de travail de précision simple ;
• joindre les contenus des deux registres lus pour former une première matrice multiplicande (B) ;
• multiplier la première matrice multiplicande par une deuxième matrice multiplicande (A) ;
• séparer le résultat (C) de la multiplication en deux mots de précision simple ; et
• écrire les deux mots de précision simple dans deux registres individuellement sélectionnés du jeu de registres.

**5.** Procédé selon la revendication 4, comprenant les étapes suivantes :

• définir la deuxième matrice multiplicande (A) directement dans un premier opérande d'une instruction de multiplication de matrices de bits ;
• définir les registres servant à former la première matrice multiplicande dans un deuxième opérande de l'instruction de multiplication de matrices de bits ; et
• définir les registres servant à accueillir le résultat de la multiplication dans un paramètre de destination de l'instruction de multiplication de matrices de bits.

**Fig 1**

A (64 bits) → MATa 8x8 bits → MMULT → MATc 8x8 bits → C (64 bits)

B (64 bits) → MATb 8x8 bits → MMULT

BMM

**Fig 2**

| MID | 80 | 40 | 20 | 10 | 08 | 04 | 02 | 01 |

| A = MOP | | | | | | 20 | | |

| B | $B_7$ | $B_6$ | $B_5$ | $B_4$ | $B_3$ | $B_2$ | $B_1$ | $B_0$ |

| C | | | | | | $B_5$ | | |

7   6   5   4   3   2   1   0

bmm $rx:$ry, MOP, $ri:$rj → IREG 30

$ri
$rj
$rx
$ry

REGS
CTRL

64

ri:rj → B  BMM  C → 32

MOP → A

64                32

rx
ry

**Fig 3**

WB                                              WA

| wb₃ | | wb₂ | wb₁ | wb₀ | wa₃ | wa₂ | wa₁ | | wa₀ |

WC | wb₃ | wa₃ | wb₂ | wa₂ | wb₁ | wa₁ | wb₀ | wa₀ |

**Fig 4**

**Fig 5A**

WA

| r0 | 07 | 06 | 05 | 04 | 03 | 02 | 01 | 00 |
|----|----|----|----|----|----|----|----|----|
|    | 17 | 16 | 15 | 14 | 13 | 12 | 11 | 10 |
|    | 27 | 26 | 25 | 24 | 23 | 22 | 21 | 20 |
|    | 37 | 36 | 35 | 34 | 33 | 32 | 31 | 30 |
| r1 | 47 | 46 | 45 | 44 | 43 | 42 | 41 | 40 |
|    | 57 | 56 | 55 | 54 | 53 | 52 | 51 | 50 |
|    | 67 | 66 | 65 | 64 | 63 | 62 | 61 | 60 |
|    | 77 | 76 | 75 | 74 | 73 | 72 | 71 | 70 |

WB

| r2 | 07 | 06 | 05 | 04 | 03 | 02 | 01 | 00 |
|----|----|----|----|----|----|----|----|----|
|    | 17 | 16 | 15 | 14 | 13 | 12 | 11 | 10 |
|    | 27 | 26 | 25 | 24 | 23 | 22 | 21 | 20 |
|    | 37 | 36 | 35 | 34 | 33 | 32 | 31 | 30 |
| r3 | 47 | 46 | 45 | 44 | 43 | 42 | 41 | 40 |
|    | 57 | 56 | 55 | 54 | 53 | 52 | 51 | 50 |
|    | 67 | 66 | 65 | 64 | 63 | 62 | 61 | 60 |
|    | 77 | 76 | 75 | 74 | 73 | 72 | 71 | 70 |

**Fig 5B**

| r0 | 07 | 06 | 05 | 04 | 03 | 02 | 01 | 00 |
|----|----|----|----|----|----|----|----|----|
|    | 17 | 16 | 15 | 14 | 13 | 12 | 11 | 10 |
|    | 27 | 26 | 25 | 24 | 23 | 22 | 21 | 20 |
|    | 37 | 36 | 35 | 34 | 33 | 32 | 31 | 30 |
| r2 | 07 | 06 | 05 | 04 | 03 | 02 | 01 | 00 |
|    | 17 | 16 | 15 | 14 | 13 | 12 | 11 | 10 |
|    | 27 | 26 | 25 | 24 | 23 | 22 | 21 | 20 |
|    | 37 | 36 | 35 | 34 | 33 | 32 | 31 | 30 |

|     |    |    |    |    |    |    |    |    | MID |
|-----|----|----|----|----|----|----|----|----|-----|
| r1  | 47 | 46 | 45 | 44 | 43 | 42 | 41 | 40 | 01 |
|     | 57 | 56 | 55 | 54 | 53 | 52 | 51 | 50 | 02 |
|     | 67 | 66 | 65 | 64 | 63 | 62 | 61 | 60 | 04 |
|     | 77 | 76 | 75 | 74 | 73 | 72 | 71 | 70 | 08 |
| r3  | 47 | 46 | 45 | 44 | 43 | 42 | 41 | 40 | 10 |
|     | 57 | 56 | 55 | 54 | 53 | 52 | 51 | 50 | 20 |
|     | 67 | 66 | 65 | 64 | 63 | 62 | 61 | 60 | 40 |
|     | 77 | 76 | 75 | 74 | 73 | 72 | 71 | 70 | 80 |

**Fig 5C**

| r10 | 07 | 06 | 05 | 04 | 03 | 02 | 01 | 00 |
|-----|----|----|----|----|----|----|----|----|
|     | 17 | 16 | 15 | 14 | 13 | 12 | 11 | 10 |
|     | 07 | 06 | 05 | 04 | 03 | 02 | 01 | 00 |
|     | 17 | 16 | 15 | 14 | 13 | 12 | 11 | 10 |
| r11 | 27 | 26 | 25 | 24 | 23 | 22 | 21 | 20 |
|     | 37 | 36 | 35 | 34 | 33 | 32 | 31 | 30 |
|     | 27 | 26 | 25 | 24 | 23 | 22 | 21 | 20 |
|     | 37 | 36 | 35 | 34 | 33 | 32 | 31 | 30 |

|     |    |    |    |    |    |    |    |    | MOP |
|-----|----|----|----|----|----|----|----|----|-----|
| r12 | 47 | 46 | 45 | 44 | 43 | 42 | 41 | 40 | 01 |
|     | 57 | 56 | 55 | 54 | 53 | 52 | 51 | 50 | 02 |
|     | 47 | 46 | 45 | 44 | 43 | 42 | 41 | 40 | 10 |
|     | 57 | 56 | 55 | 54 | 53 | 52 | 51 | 50 | 20 |
| r13 | 67 | 66 | 65 | 64 | 63 | 62 | 61 | 60 | 04 |
|     | 77 | 76 | 75 | 74 | 73 | 72 | 71 | 70 | 08 |
|     | 67 | 66 | 65 | 64 | 63 | 62 | 61 | 60 | 40 |
|     | 77 | 76 | 75 | 74 | 73 | 72 | 71 | 70 | 80 |

**Fig 6**

**Fig 7A**

b7:b0

| r0 | 07 | 06 | 05 | 04 | 03 | 02 | 01 | 00 |
|----|----|----|----|----|----|----|----|----|
|    | 17 | 16 | 15 | 14 | 13 | 12 | 11 | 10 |
|    | 27 | 26 | 25 | 24 | 23 | 22 | 21 | 20 |
|    | 37 | 36 | 35 | 34 | 33 | 32 | 31 | 30 |
| r1 | 47 | 46 | 45 | 44 | 43 | 42 | 41 | 40 |
|    | 57 | 56 | 55 | 54 | 53 | 52 | 51 | 50 |
|    | 67 | 66 | 65 | 64 | 63 | 62 | 61 | 60 |
|    | 77 | 76 | 75 | 74 | 73 | 72 | 71 | 70 |

b15:b8

| r2 | 07 | 06 | 05 | 04 | 03 | 02 | 01 | 00 |
|----|----|----|----|----|----|----|----|----|
|    | 17 | 16 | 15 | 14 | 13 | 12 | 11 | 10 |
|    | 27 | 26 | 25 | 24 | 23 | 22 | 21 | 20 |
|    | 37 | 36 | 35 | 34 | 33 | 32 | 31 | 30 |
| r3 | 47 | 46 | 45 | 44 | 43 | 42 | 41 | 40 |
|    | 57 | 56 | 55 | 54 | 53 | 52 | 51 | 50 |
|    | 67 | 66 | 65 | 64 | 63 | 62 | 61 | 60 |
|    | 77 | 76 | 75 | 74 | 73 | 72 | 71 | 70 |

**Fig 7B**

| r0 | 70 | 60 | 50 | 40 | 30 | 20 | 10 | 00 |
|----|----|----|----|----|----|----|----|----|
|    | 71 | 61 | 51 | 41 | 31 | 21 | 11 | 01 |
|    | 72 | 62 | 52 | 42 | 32 | 22 | 12 | 02 |
|    | 73 | 63 | 53 | 43 | 33 | 23 | 13 | 03 |
| r1 | 74 | 64 | 54 | 44 | 34 | 24 | 14 | 04 |
|    | 75 | 65 | 55 | 45 | 35 | 25 | 15 | 05 |
|    | 76 | 66 | 56 | 46 | 36 | 26 | 16 | 06 |
|    | 77 | 67 | 57 | 47 | 37 | 27 | 17 | 07 |

| r2 | 70 | 60 | 50 | 40 | 30 | 20 | 10 | 00 |
|----|----|----|----|----|----|----|----|----|
|    | 71 | 61 | 51 | 41 | 31 | 21 | 11 | 01 |
|    | 72 | 62 | 52 | 42 | 32 | 22 | 12 | 02 |
|    | 73 | 63 | 53 | 43 | 33 | 23 | 13 | 03 |
| r3 | 74 | 64 | 54 | 44 | 34 | 24 | 14 | 04 |
|    | 75 | 65 | 55 | 45 | 35 | 25 | 15 | 05 |
|    | 76 | 66 | 56 | 46 | 36 | 26 | 16 | 06 |
|    | 77 | 67 | 57 | 47 | 37 | 27 | 17 | 07 |

**Fig 7C**

| r0 | 70 | 60 | 50 | 40 | 30 | 20 | 10 | 00 |
|----|----|----|----|----|----|----|----|----|
|    | 71 | 61 | 51 | 41 | 31 | 21 | 11 | 01 |
|    | 72 | 62 | 52 | 42 | 32 | 22 | 12 | 02 |
|    | 73 | 63 | 53 | 43 | 33 | 23 | 13 | 03 |
| r2 | 70 | 60 | 50 | 40 | 30 | 20 | 10 | 00 |
|    | 71 | 61 | 51 | 41 | 31 | 21 | 11 | 01 |
|    | 72 | 62 | 52 | 42 | 32 | 22 | 12 | 02 |
|    | 73 | 63 | 53 | 43 | 33 | 23 | 13 | 03 |

| r1 | 74 | 64 | 54 | 44 | 34 | 24 | 14 | 04 | 01 |
|----|----|----|----|----|----|----|----|----|----|
|    | 75 | 65 | 55 | 45 | 35 | 25 | 15 | 05 | 02 |
|    | 76 | 66 | 56 | 46 | 36 | 26 | 16 | 06 | 04 |
|    | 77 | 67 | 57 | 47 | 37 | 27 | 17 | 07 | 08 |
| r3 | 74 | 64 | 54 | 44 | 34 | 24 | 14 | 04 | 10 |
|    | 75 | 65 | 55 | 45 | 35 | 25 | 15 | 05 | 20 |
|    | 76 | 66 | 56 | 46 | 36 | 26 | 16 | 06 | 40 |
|    | 77 | 67 | 57 | 47 | 37 | 27 | 17 | 07 | 80 |

**Fig 7D**

| r10 | 70 | 60 | 50 | 40 | 30 | 20 | 10 | 00 |
|-----|----|----|----|----|----|----|----|----|
|     | 70 | 60 | 50 | 40 | 30 | 20 | 10 | 00 |
|     | 71 | 61 | 51 | 41 | 31 | 21 | 11 | 01 |
|     | 71 | 61 | 51 | 41 | 31 | 21 | 11 | 01 |
| r11 | 72 | 62 | 52 | 42 | 32 | 22 | 12 | 02 |
|     | 72 | 62 | 52 | 42 | 32 | 22 | 12 | 02 |
|     | 73 | 63 | 53 | 43 | 33 | 23 | 13 | 03 |
|     | 73 | 63 | 53 | 43 | 33 | 23 | 13 | 03 |

| r12 | 74 | 64 | 54 | 44 | 34 | 24 | 14 | 04 | 01 |
|-----|----|----|----|----|----|----|----|----|----|
|     | 74 | 64 | 54 | 44 | 34 | 24 | 14 | 04 | 10 |
|     | 75 | 65 | 55 | 45 | 35 | 25 | 15 | 05 | 02 |
|     | 75 | 65 | 55 | 45 | 35 | 25 | 15 | 05 | 20 |
| r13 | 76 | 66 | 56 | 46 | 36 | 26 | 16 | 06 | 04 |
|     | 76 | 66 | 56 | 46 | 36 | 26 | 16 | 06 | 40 |
|     | 77 | 67 | 57 | 47 | 37 | 27 | 17 | 07 | 08 |
|     | 77 | 67 | 57 | 47 | 37 | 27 | 17 | 07 | 80 |

Europäisches
Patentamt

European
Patent Office

Office européen
des brevets

**RAPPORT DE RECHERCHE EUROPEENNE**

Numéro de la demande

EP 15 16 7989

| | DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (IPC) |
| X | US 2004/255100 A1 (KERSHAW DANIEL [US]) 16 décembre 2004 (2004-12-16) * page 2, ligne 1 - ligne 6 * * page 6, ligne 10 - ligne 25 * * page 8, ligne 22 - page 9, ligne 10 * ----- | 1-5 | INV. G06F9/30 |
| A | US 2002/010847 A1 (ABDALLAH MOHAMMAD [US] ET AL) 24 janvier 2002 (2002-01-24) * alinéa [0039] - alinéa [0040]; figures 2B,2C * ----- | 1-5 | |
| A | WO 00/68783 A2 (ANALOG DEVICES INC [US]) 16 novembre 2000 (2000-11-16) * page 20, ligne 21 - page 9, ligne 9; figure 9 * ----- | 1-5 | |

DOMAINES TECHNIQUES
RECHERCHES (IPC)

G06F

Le présent rapport a été établi pour toutes les revendications

| Lieu de la recherche | Date d'achèvement de la recherche | Examinateur |
|---|---|---|
| La Haye | 15 juin 2015 | Moraiti, Marina |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 16 7989

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-06-2015

| Document brevet cité au rapport de recherche | Date de publication | Membre(s) de la famille de brevet(s) | | Date de publication |
|---|---|---|---|---|
| US 2004255100 A1 | 16-12-2004 | AU | 2003290285 A1 | 04-01-2005 |
| | | CN | 1791857 A | 21-06-2006 |
| | | EP | 1634163 A1 | 15-03-2006 |
| | | IL | 169374 A | 31-01-2011 |
| | | JP | 4402654 B2 | 20-01-2010 |
| | | JP | 2006527868 A | 07-12-2006 |
| | | KR | 20060040597 A | 10-05-2006 |
| | | MY | 135903 A | 31-07-2008 |
| | | TW | I266204 B | 11-11-2006 |
| | | US | 2004255100 A1 | 16-12-2004 |
| | | WO | 2004114127 A1 | 29-12-2004 |
| US 2002010847 A1 | 24-01-2002 | CN | 1244675 A | 16-02-2000 |
| | | CN | 1595389 A | 16-03-2005 |
| | | CN | 1595390 A | 16-03-2005 |
| | | DE | 19914617 A1 | 14-10-1999 |
| | | GB | 2339040 A | 12-01-2000 |
| | | HK | 1027402 A1 | 30-11-2001 |
| | | SG | 85630 A1 | 15-01-2002 |
| | | TW | 470914 B | 01-01-2002 |
| | | US | 6230253 B1 | 08-05-2001 |
| | | US | 2002010847 A1 | 24-01-2002 |
| | | US | 2005216706 A1 | 29-09-2005 |
| WO 0068783 A2 | 16-11-2000 | EP | 1188112 A2 | 20-03-2002 |
| | | EP | 2267596 A2 | 29-12-2010 |
| | | EP | 2267597 A2 | 29-12-2010 |
| | | EP | 2267896 A2 | 29-12-2010 |
| | | JP | 2002544587 A | 24-12-2002 |
| | | WO | 0068783 A2 | 16-11-2000 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- **YEDIDYA HILEWITZ et al.** Bit Matrix Multiplication in Commodity Processors. *IEEE International Conference on Application-Specific Systems, Architectures and Processors,* 2008